# EUROPEAN PATENT SPECIFICATION

(11) **EP 3 985 360 B1**
(45) Date of publication and mention of the grant of the patent: **13.12.2023**
(21) Application number: 20202625.8
(22) Date of filing: 19.10.2020
(51) Int. Cl.: G01F 1/46, G01P 5/16

(54) **FLOW MEASUREMENT USING MULTIPLE PITOT TUBES AND MULTIPLE SENSING UNITS**
DURCHFLUSSMESSUNG MITTELS MEHRERER PITOT-ROHRE UND MEHRERER SENSOREINHEITEN
MESURE DU DÉBIT À L'AIDE DE TUBES DE PITOT MULTIPLES ET D'UNITÉS DE DÉTECTION MULTIPLES

(43) Date of publication of application: 20.04.2022
(73) Proprietor: L'Air Liquide, Société Anonyme pour l'Etude et l'Exploitation des Procédés Georges Claude, 75007 Paris (FR)
(72) Inventor: Kuzniar, Jakub, 31-545 Krakow (PL); Kazimierz, Barciak, 31-545 Krakow (PL)
(74) Representative: Schwenderling, Jens

(56) References cited:
- WO-A1-03/089883
- US-A1- 2005 241 413
- US-A1- 2016 175 897
- US-A1- 2020 033 166

## Description

The invention is directed to a device for measuring a flow of a medium through a pipe. Further, the invention is directed to a respective arrangement and a respective use. In particular, the invention is directed to measuring the flow of exhaust gas.

It is known to measure the flow of a medium through a pipe by means of so-called pitot tubes. This type of measurement is based on the fact that the total pressure of a flowing medium is the sum of the static pressure and the dynamic pressure. A pitot tube has a first opening exposed directly to the flowing medium. Via the first opening, the total pressure can be determined. Further, a pitot tube has a second opening that faces away from the flow. Hence, via the second opening the static pressure can be measured. The difference of the total pressure and the static pressure is the dynamic pressure, from which the flow can be calculated.

Pitot tubes, however, provide accurate measurements only in case the flow of the medium is uniform across the cross-section of the pipe. Otherwise, measurements with a pitot tube are not representative. This is an issue, in particular, with pipes of diameters as large as 1 m. Such large pipes are commonly used for exhausting gas.

In order to address this issue, so-called averaging pitot tubes have been developed. These comprise several first openings and several second openings, wherein the total pressure is determined as an average of the pressures obtained with the first openings and the static pressure is obtained as an average of the pressures obtained with the second openings. Nevertheless, a measurement accuracy of 2 % can require a ratio of pipe diameter D to straight pipe length L upstream of the pitot tube of up to LID = 20. For a pipe with a diameter of, for example, D = 3 m this means that the pitot tube has to be placed downstream of a straight pipe section of L = 60 m. However, in many applications there is no such long straight pipe section. Attempts to use flow straighteners have failed because the flow straighteners cause a significant pressure drop within the medium flowing through the pipe.

There is a desire to be able to measure the flow of a medium through a pipe at an accuracy of 2 % with L/D = 5 even for D > 2 m and without significant pressure drops within the medium flowing through the pipe.

There have been attempts to fulfil these requirements. However, either the requirements have not been met or the device turned out to be unreliable. To this end, in particular, clogging of pitot tubes is an issue.

From US 2005/241 413 A1 a method and apparatus for fluid flow straightening and measurement is known, wherein multiple pitot tubes are provided and the respective outputs are combined with a tubing manifold, which then averages the respective outputs before they get to a pressure measuring device, such as a pressure transmitter.

From US 2016/0 175 897 A1 a pressure transmitter coupling for coupling a pressure transmitter to a process fluid is known, wherein two pressure transmitters can be used to provide redundant measurements or additional diagnostic functionality. From US 2020/0 033 166 A1 a differential pressure airflow sensor device is known, wherein a pitot tube extends from a housing and at least two pressure transducers are included within the housing, having a different pressure sensing range. From WO 03/089 883 A1 an averaging Pitot tube flow meter is known, having a plurality of circumferentially spaced pitot heads and a stagnation pressure header connecting the stagnation pressure holes for providing an average stagnation pressure and a static pressure header connecting the static pressure holes for providing an average static pressure.

However, with none of these teachings a sufficiently reliable and accurate flow measurement is possible.

The object of the invention is to improve the prior art so that the flow of a medium flowing through a pipe can be measured reliably and accurately even if the flow is not uniform across the cross-section of the pipe.

The object is solved with the device, the arrangement and the use according to the independent claims. Advantageous refinements are presented in the dependent claims. The features described in the claims and in the description can be combined with each other in any technologically reasonable manner.

According to the invention a device for measuring a flow of a medium through a pipe is presented. The device comprises multiple pitot tubes and multiple sensing units, wherein each of the pitot tubes has a respective total pressure outlet and a respective static pressure outlet, wherein each of the sensing units has a respective total pressure inlet and a respective static pressure inlet, wherein all of the total pressure outlets are fluidly connected to all of the total pressure inlets by respective first connection lines, wherein all of the static pressure outlets are fluidly connected to all of the static pressure inlets by respective second connection lines, wherein each of the sensing units is configured to determine the flow of the medium through the pipe by comparing the pressures at the respective total pressure inlet and the respective static pressure inlet with each other, and wherein all first connection lines include a first shared tube segment and/or all second connection lines include a second shared tube segment.

The device can be used to measure the flow of a medium flowing through a pipe. The medium can be a gas or a liquid. The flow can be expressed as the flow rate (that is the velocity at which the medium flows through the pipe), the volume flow rate of the medium or the mass flow rate of the medium. All these quantities are directly related to each other and are therefore subsumed under the general term "flow". The volume flow rate is equal to the flow rate times the cross-sectional area of the pipe at the place of measurement. The mass flow rate is equal to the volume flow rate times the density of the medium. The device can also be referred to as a device for measuring the flow rate, the volume flow rate or the mass flow rate of a medium flowing through a pipe.

The device can be used, in particular, to measure the flow of exhaust gas as the medium. The pipe can have, for example, a rectangular or circular cross-section. Preferably, the cross-sectional area of the pipe is larger than 1 m² [square meters], in particular larger than 10 m². In the case of a circular cross-section, the pipe preferably has a diameter of at least 2 m. The pipe is not part of the device. However, the device is suitable for measuring the flow of a medium flowing through the pipe.

The device comprises multiple pitot tubes. Each of the pitot tube is configured as described in the prior art section above. In particular, each of the pitot tubes has a respective total pressure outlet and a respective static pressure outlet. Except for unavoidable losses, the pressure at the total pressure outlet is equal to the total pressure within the pipe and the pressure at the static pressure outlet is equal to the static pressure within the pipe. The total pressure outlet and the static pressure outlet are fluid outlets, that is outlets for a liquid or a gas. This, however, does not mean that a liquid or gas actually flows out of the outlets. It is sufficient that a tube can be connected to the outlet such that the pressure within the tube equals the pressure at the outlet. The fluid or gas can be the medium of which the flow is supposed to be measured. Alternatively, an intermediate medium can be used that is separated from the medium flowing through the pipe in terms of a membrane. At the outlets, not an electrical signal representing a pressure is output, but rather the pressure itself.

From the total pressure and the static pressure the flow can be determined. Therefore, the device comprises multiple sensing units. Each of the sensing units has a respective total pressure inlet and a respective static pressure inlet. Each of the sensing units is configured to determine the flow of the medium through the pipe by comparing the pressures at the respective total pressure inlet and the respective static pressure inlet with each other. To the inlets of the sensing units, the total pressure and the static pressure are provided in terms of the pressure of a liquid or gas. This liquid or gas can be the medium flowing through the pipe or an intermediate medium. From the pressures at the inlets the flow can be determined. Therefore, the difference of the pressures is taken into account. For example, each sensing unit can comprise a respective sensor for measuring the total pressure at the total pressure inlet and a respective sensor for measuring the static pressure at the static pressure inlet. Alternatively, the difference between the total pressure and the static pressure can be obtained as an actual pressure differential. In that case each sensing unit preferably has a sensor for measuring the pressure differential.

All of the total pressure outlets are fluidly connected to all of the total pressure inlets by respective first connection lines and all of the static pressure outlets are fluidly connected to all of the static pressure inlets by respective second connection lines. A fluid connection is a connection via which a pressure can be transferred. That is, the pressure outlets of the pitot tubes are connected to the inlets of the sensing units such that the pressures at the outlets of the pitot tubes can be used for the determination of the flow rate by the sensing units. The first connection lines and the second connection lines are configured as tubes. Hence, instead of using the expression "fluidly connected" it could equally be said that all of the total pressure outlets are connected to all of the total pressure inlets by respective first connection tubes and all of the static pressure outlets are connected to all of the static pressure inlets by respective second connection tubes.

The term "connection line" is used to describe a connection between an outlet and an inlet. Each connection line is a path from one of the outlets to one of the inlets. The device preferably comprises a tube network, by means of which the connection lines are realized. Each of the connection lines comprises several segments of the tube network. Each segment of the pipe network can be part of one or several of the connection lines. In case several connection lines share a tube segment, liquids or gases form the respective connection lines can mix such that it cannot be distinguished to which connection line a certain amount of the liquid or gas belongs. To this end the connection lines are merely present in a conceptual manner.

All first connection lines include a first shared tube segment and/or all second connection lines include a second shared tube segment. Therein, the "and"-case is preferred. The fact that all first connection lines include the first shared tube segment means that any path from a total pressure outlet to a total pressure inlet runs through the first shared tube segment. Analogously, all paths from a static pressure outlet to a static pressure inlet run through the second shared tube segment. For example, the connection lines may each consist of a respective exclusive tube segment between the respective outlet and the shared tube segment, the shared tube segment, and a respective exclusive tube segment between the shared tube segment and the respective inlet. The exclusive tube segments are exclusive to the respective connection line to the extent that only this connection line runs through the exclusive tube segments.

In the first shared tube segment the pressures from the total pressure outlets are averaged. Therein, the term "averaging" does not refer to a calculation, but rather to the fact that the pressure in the first shared tube segment is an average of the pressures at the total pressure outlets. Thus, at the total pressure inlets of the sensing units an average of the pressures from the total pressure outlets can be used for determining the flow of the medium. Similarly, due to the second shared tube segment an average of the pressures from the static pressure outlets can be used for determining the flow of the medium. Due to this averaging the flow can be determined particularly accurately because the pressures from different locations within the pipe can be used. It was found that with the described device the flow can be measured at an accuracy of 2 % with L/D = 5 even for D > 2 m. That is, in case of a pipe having a diameter D = 2 m it is sufficient to have a length L = 10 m of a straight segment upstream of the device in order to obtain an accuracy of 2 %. Therefore, it is not required to use a flow straightener that could cause a significant pressure drop within the medium flowing through the pipe.

Further, the described device is particularly fail-safe, in particular in view of clogging of the pitot tubes and/or of the connection lines. For the device to be operational it is sufficient that at least one of the pitot tubes is operational and that at least one of the sensing units is operational. This applies to any combination of the pitot tubes and the sensing units. That is, for the device to be operational it is not required that the sensing unit assigned to an operational pitot tube is operational. There is no assignment of the pitot tubes to the sensing units.

Compared with the averaging obtainable with averaging pitot tubes, the averaging due to the shared tube segments is particularly fail-safe. This is because the shared tube segments result in an increased redundancy.

Nevertheless, according to a preferred embodiment of the device the pitot tubes are averaging pitot tubes.

In this embodiment a particularly high measurement accuracy can be obtained. This is because in addition to the averaging due to the shared tube segments, a further averaging occurs within the pitot tubes. Therefore, each of the pitot tubes has several total pressure openings connected to the total pressure outlet. In operation, the total pressure openings face the flow directly so as to capture the total pressure of the medium within the pipe. The pressure at the total pressure outlet is the average of the pressures at the total pressure openings. Alternatively or additionally, the pitot tube has several static pressure openings connected to the static pressure outlet. In operation, the static pressure openings face away from the flow so as to capture the static pressure of the medium through the pipe. The pressure at the static pressure outlet is the average of the pressures at the static pressure openings.

According to a further preferred embodiment of the device the first connection lines have the same length and/or the second connection lines have the same length. Therein, the "and"-case is preferred.

The length of the connection lines is measured along the respective connection line. In the connection lines, the pressure may drop due to unavoidable losses. If the connection lines have the same length, it can be expected that in all connection lines the same losses occur. Hence, in the present embodiment a particularly high measurement accuracy can be achieved.

In the present embodiment the lengths of the first connection lines are compared with each other and the lengths of the second connection lines are compared with each other. This does not state anything with respect to a comparison between the lengths of the first connection lines with the lengths of the second connection lines. However, it is preferred that the first connection lines have the same length as the second connection lines. This can avoid a systematical error in the measurement. If, for example, the first connection lines were significantly longer than the second connection lines, the determined total pressure could be systematically too low compared with the static pressure. The obtained flow would thereby be systematically too low. If, in contrast, all connection lines have the same length, pressure drops in the connection lines may cancel out each other such that the flow can be measured accurately.

According to a further preferred embodiment of the device at least two of the total pressure outlets are connected to the first shared tube segment via a T-junction and/or at least two of the static pressure outlets are connected to the second shared tube segment via a T-junction. Therein, the "and"-case is preferred.

The fact that an outlet is connected to a shared tube segment via a T-junction means that a path from the outlet to the shared tube segment runs through at least one T-junction. Hence, a pair of two outlets can be connected to the shared tube segment in that the paths from these two outlets meet in a T-junction and, from there, run jointly into the shared tube segment. In a different example, four outlets can be connected to the shared tube segment in that for two pairs of the outlets the respective paths are joined to two joined paths by means of two T-junctions and that the two joined paths are joined by a further T-junction to a single path that runs into the shared tube segment. Alternatively, four outlets can be connected to the shared tube segment in that the paths from the four outlets are joined to two paths by means of two T-junctions and that the two joined paths directly run into the shared tube segment, for example at opposite ends of the shared tube segment.

Using T-junctions was found to allow a particularly high measurement accuracy because T-junctions cause particularly low pressure losses.

According to a further preferred embodiment of the device the first shared tube segment is connected to the total pressure outlets via a manifold of T-junctions and/or the second shared tube segment is connected to the static pressure outlets via a manifold of T-junctions. Therein, the "and"-case is preferred.

A manifold of T-junctions comprises the respective T-junctions as well as the tube segments directly connected to the T-junctions. By means of the manifold, the connection lines can fan out from the shared tube segment to the outlets. Thereby, it is possible to connect several outlets to the shared tube segment using only T-junctions and tube segments directly connected thereto. This avoids complex junctions that could cause significant pressure losses.

According to a further preferred embodiment of the device all total pressure inlets are connected directly to the first shared tube segment and/or all static pressure inlets are connected directly to the second shared tube segment. Therein, the "and"-case is preferred.

The fact that the inlets are connected directly to the shared tube segments means that there is no junction in between. The tube segment extending between the inlet and the shared tube segment is exclusive to the respective connection line. It was found that thereby, a particularly high measurement accuracy could be achieved.

According to a further preferred embodiment of the device all total pressure inlets are connected directly to an axial center of the first shared tube segment and/or all static pressure inlets are connected directly to an axial center of the second shared tube segment. Therein, the "and"-case is preferred.

The axial center of the shared tube segment is the center of the tube segment along the axis of the shared tube segment. If the inlets are connected to the axial center of the shared tube segment, the measurement accuracy is particularly high. This is particularly true in case that a first half of the outlets is connected to a first end of the shared tube segment and a second half of the outlets is connected to a second end of the shared tube segment, wherein the shared tube segment extends between its first end and its second end. In that case any pressure drop occurring in the shared tube segment is the same for both halves of the outlets.

According to a further preferred embodiment of the device all first connection lines cover the same length between the respective total pressure outlet and the first shared tube segment and/or all second connection lines cover the same length between the respective static pressure outlet and the second shared tube segment. Therein, the "and"-case is preferred.

In this embodiment any pressure losses between the outlets and the shared tube segment are the same for all outlets. This increases the measurement accuracy.

In the first place, this embodiment is directed to a comparison of the lengths of the first connection lines with each other and/or to a comparison of the lengths of the second connection lines with each other. This does not state anything with respect to a comparison between the lengths of the first connection lines with the lengths of the second connection lines. However, it is preferred that the length covered by the first connection lines between the respective total pressure outlet and the first shared tube segment is equal to the length covered by the second connection lines between the respective static pressure outlet and the second shared tube segment.

According to a further aspect of the invention an arrangement is presented that comprises a pipe and a device for measuring a flow of a medium through the pipe, wherein the device is configured as described.

The advantages and features of the described device are transferrable to the described arrangement, and vice versa. The described device is preferably configured to be used in the described arrangement. The pitot tubes of the device are arranged within the pipe to the extend required for measuring the flow of the medium through the pipe. The pitot tubes are preferably arranged in a respective plane that is oriented perpendicularly to an axis of the pipe.

According to a preferred embodiment of the arrangement the pitot tubes are spaced apart from each other along an axis of the tube.

A non-uniform flow can have extreme values in the center of the cross-section of the pipe and at the edges of the cross-section. Hence, a non-uniform flow can be measured particularly accurately by means of a pitot tube that covers the center and the edges of the cross-section of the pipe. In the present embodiment it is possible to arrange several or even all of the pitot tubes such that they cover the center of the cross-section of the pipe. Hence, a particularly accurate measurement can be achieved.

According to a preferred embodiment of the arrangement, in a cross-section of the pipe each of the pitot tubes is oriented differently.

In this embodiment each of the pitot tubes can cover a different edge region of the cross-section of the pipe. Thus, the entire cross-section of the pipe can be covered. This embodiment is particularly preferred in case of a pipe having a circular cross-section.

According to a preferred embodiment of the arrangement, in a cross-section of the pipe all pitot tubes enclose an angle in the range of 30 and 60° with the respective neighboring pitot tubes.

It is particularly preferred that in a cross-section of the pipe all pitot tubes enclose the same angle with the respective neighboring pitot tubes. In the case of three pitot tubes, this angle is 60°. In the case of four pitot tubes, this angle is 45°. In the case of six pitot tubes, this angle is 30°.

According to a preferred embodiment of the arrangement, in a cross-section of the pipe the pitot tubes are arranged parallel to each other.

Preferably, the pitot tubes are spaced apart equally from each other when viewed in the cross-section of the pipe. Thereby, the cross-section can be covered equally by the pitot tubes. This embodiment is particularly preferred in case of a pipe having a rectangular cross-section.

According to a preferred embodiment of the arrangement the pipe has a cross-sectional area of at least 1 m².

According to a further aspect of the invention a use of the described device for measuring a flow of a medium through a pipe is presented, wherein the medium is exhaust gas.

The advantages and features of the described device and arrangement are transferrable to the described use, and vice versa.

In the following the invention will be described with respect to the figures. The figures show a preferred embodiment, to which the invention is not limited. The figures and the dimensions shown therein are only schematic. The figures show:
- Fig. 1:: a first embodiment of a device according to the invention,
- Fig. 2:: a perspective view of an arrangement according to the invention including the device of Fig. 1,
- Fig. 3:: a cross-sectional view of the arrangement of Fig. 2,
- Fig. 4:: a second embodiment of a device according to the invention,
- Fig. 5:: a perspective view of an arrangement according to the invention including the device of Fig. 4,
- Fig. 6:: a cross-sectional view of the arrangement of Fig. 5.

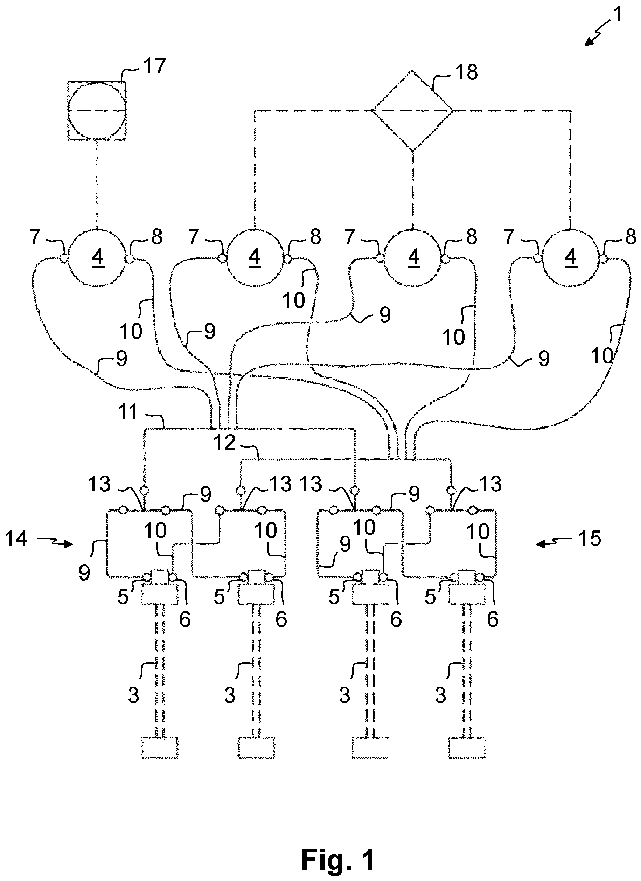

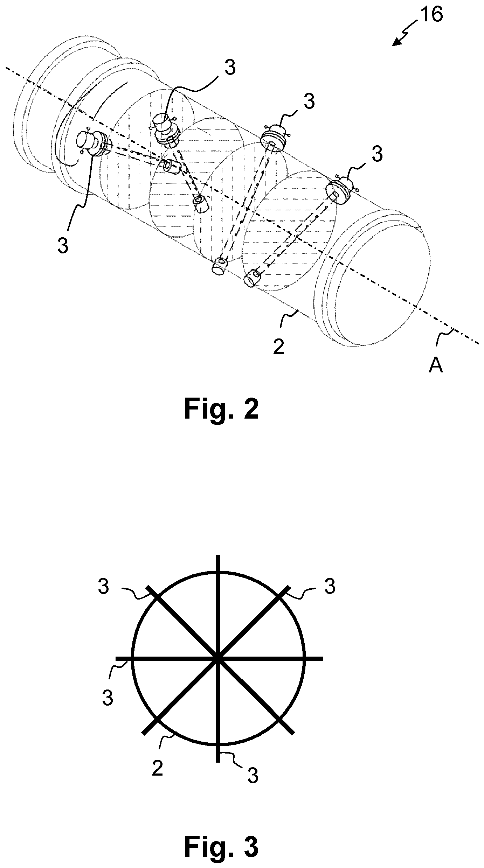

Fig. 1 shows a device 1 for measuring a flow of a medium through a pipe 2 (which is shown in Fig. 2 and 3). The device 1 can be used, in particular, to measure the flow of an exhaust gas flowing through the pipe 2.

The device 1 comprises four pitot tubes 3 that are configured as averaging pitot tubes. The pitot tubes 3 can be used to measure the dynamic pressure within the pipe 2, from which the flow of the medium can be determined. The dynamic pressure can be obtained as the difference between the total pressure and the static pressure. In order to be able to use these two parameters, each of the pitot tubes 3 has a respective total pressure outlet 5 and a respective static pressure outlet 6. The outlets 5,6 are fluid outlets at which a pressure equals the total pressure or the static pressure within the pipe 2, respectively. That is, at the outlets 5,6 the pressure is output as an actual physical quantity and not as an electrical signal. The device 1 further comprises four sensing units 4. With the sensing units 4, the pressures from the outlets 5,6 are processed. Therefore, each of the sensing units 4 has a respective total pressure inlet 7 and a respective static pressure inlet 8. Each of the sensing units 4 is configured to determine the flow of the medium through the pipe 2 by comparing the pressures at the respective total pressure inlet 7 and the respective static pressure inlet 8 with each other.

In order to be able to process the pressures from the outlets 5,6 by the sensing units 4, the outlets 5,6 are connected fluidly to the inlets 7,8. Thereby, all of the total pressure outlets 5 are fluidly connected to all of the total pressure inlets 7 by respective first connection lines 9 and all of the static pressure outlets 6 are fluidly connected to all of the static pressure inlets 8 by respective second connection lines 10. All first connection lines 9 include a first shared tube segment 11 and all second connection lines 10 include a second shared tube segment 12. Thereby, the total pressure from the four total pressure outlets 5 is averaged and the static pressure from the four static pressure outlets 6 is averaged. This averaging is an addition to the averaging obtained because the pitot tubes 3 are already averaging pitot tubes 3. Hence, at all total pressure inlets 7 the same total pressure is present and at all static pressure inlets 8 the same static pressure is present. All four sensing units 4 are therefore provided with the same pressures to determine the flow of the medium through the pipe 2. This is even true if some of the pitot tubes 3 fail. That is, the flow can be determined if at least one of the four sensing units 4 and at least one of the four pitot tubes 3 are operational. This applies to any combination of the sensing units 4 and the pitot tubes 3. Due to this redundancy, the device 1 is particularly fail-safe.

In order to have the pressures at the total pressure inlets 7 of the sensing units 4 to be as similar to each other as possible, the first connection lines 9 have the same overall length and cover the same length between the respective total pressure outlet 5 and the first shared tube segment 11. Similarly, in order to have the pressures at the static pressure inlets 8 of the sensing units 4 to be as similar to each other as possible, the second connection lines 10 have the same overall length and cover the same length between the respective static pressure outlet 6 and the second shared tube segment 12. Also, all total pressure inlets 7 are connected directly to an axial center of the first shared tube segment 11 and all static pressure inlets 8 are connected directly to an axial center of the second shared tube segment 12.

Each of the total pressure outlets 5 is connected to the first shared tube segment 11 via a T-junction 13 and each of the static pressure outlets 6 is connected to the second shared tube segment 12 via a T-junction 13. To this end, the first shared tube segment 11 is connected to the total pressure outlets 5 via a first manifold 14 of T-junctions 13 and the second shared tube segment 12 is connected to the static pressure outlets 6 via a second manifold 15 of T-junctions 13.

One of the sensing units 4 is connected to a basic process control system (BPCS) 17. The further sensing units 4 are connected to an emergency shutdown device (ESD) 18.

Fig. 2 shows a perspective view of an arrangement 16 including the device 1 of Fig. 1 as well as a pipe 2. The pitot tubes 3 of the device 1 are arranged within the pipe 2. This means that the pitot tubes 3 are arranged such that they can be used to measure the flow of the medium through the pipe 2. In particular the total pressure outlets 5 and the static pressure outlets 6 can be placed outside of the pipe 2. The pitot tubes 3 are spaced apart from each other along an axis A of the tube 2. In a cross-section of the pipe 2 perpendicular to the axis A each of the pitot tubes 3 is oriented differently in that all pitot tubes 3 enclose an angle of 45° with the respective neighboring pitot tubes 3. The pipe 2 has a cross-sectional area of at least 1 m².

With the described device 1 the flow of a medium through a pipe 2 can be measured reliably and accurately even if the flow is not uniform across the cross-section of the pipe 2. This is due to the fact that the connection lines 13,14 between the outlets 5,6 of the pitot tubes 3 and the inlets 7,8 of the sensing units 4 include the shared tube segments 11,12.

Fig. 3 shows a cross-sectional view of the arrangement 16 of Fig. 2. In particular from this figure it can be seen that all pitot tubes 3 enclose an angle of 45° with the respective neighboring pitot tubes 3.

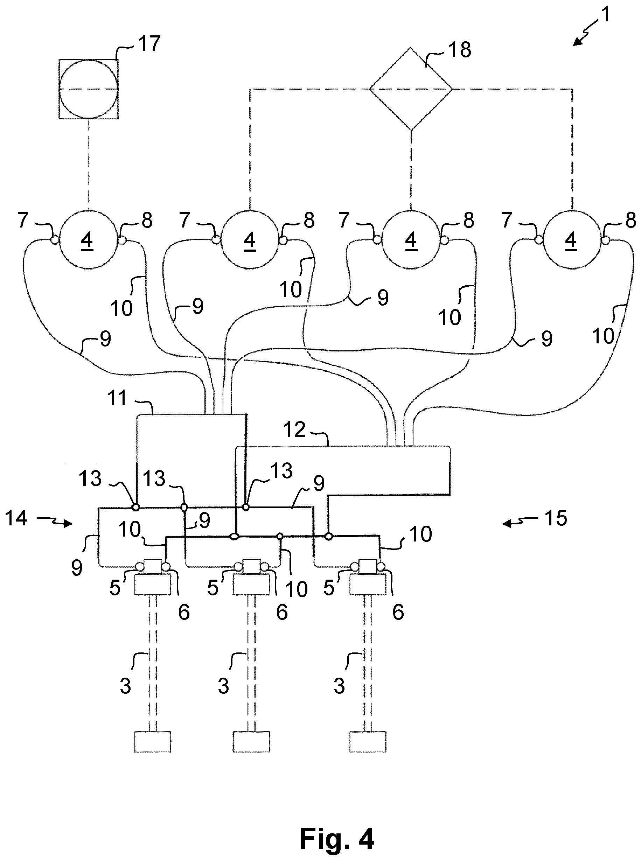

Fig. 4 shows a second embodiment of a device 1 for measuring a flow of a medium through a pipe 2. This embodiment is similar to the embodiment of Fig. 1. The difference is that according to Fig. 4 there are only three pitot tubes 3. The connection lines 9,10 are configured accordingly.

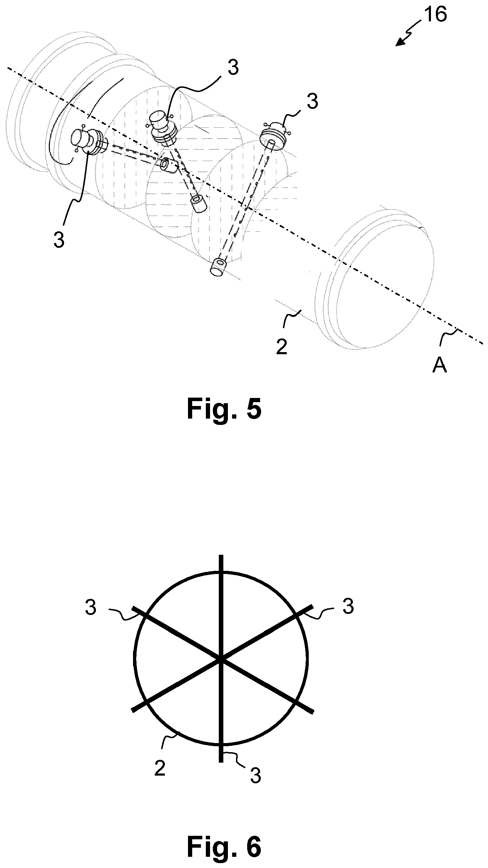

Fig. 5 shows a perspective view of an arrangement 16 including the device 1 of Fig. 4. Herein, it can be seen that all pitot tubes 3 enclose an angle of 60° with the respective neighboring pitot tubes 3. This can be seen even better in Fig. 6, which is a cross-sectional view of the arrangement 16 of Fig. 5.

### List of reference numerals

- 1: device
- 2: pipe
- 3: pitot tube
- 4: sensing unit
- 5: total pressure outlet
- 6: static pressure outlet
- 7: total pressure inlet
- 8: static pressure inlet
- 9: first connection line
- 10: second connection line
- 11: first shared tube segment
- 12: second shared tube segment
- 13: T-junction
- 14: first manifold
- 15: second manifold
- 16: arrangement
- 17: basic process control system (BPCS)
- 18: emergency shutdown device (ESD)

- A: axis

## Claims

1. Device (1) for measuring a flow of a medium through a pipe (2), wherein the device (1) comprises multiple pitot tubes (3) and multiple sensing units (4), wherein each of the pitot tubes (3) has a respective total pressure outlet (5) and a respective static pressure outlet (6), wherein each of the sensing units (4) has a respective total pressure inlet (7) and a respective static pressure inlet (8), wherein all of the total pressure outlets (5) are fluidly connected to all of the total pressure inlets (7) by respective first connection lines (9), wherein all of the static pressure outlets (6) are fluidly connected to all of the static pressure inlets (8) by respective second connection lines (10), wherein each of the sensing units (4) is configured to determine the flow of the medium through the pipe (2) by comparing the pressures at the respective total pressure inlet (7) and the respective static pressure inlet (8) with each other, and wherein all first connection lines (9) include a first shared tube segment (11) and/or all second connection lines (10) include a second shared tube segment (12).

2. Device (1) according to claim 1, wherein the pitot tubes (3) are averaging pitot tubes.

3. Device (1) according to one of the preceding claims, wherein the first connection lines (9) have the same length and/or wherein the second connection lines (10) have the same length.

4. Device (1) according to one of the preceding claims, wherein at least two of the total pressure outlets (5) are connected to the first shared tube segment (11) via a T-junction (13) and/or wherein at least two of the static pressure outlets (6) are connected to the second share tube segment (12) via a T-junction (13).

5. Device (1) according to one of the preceding claims, wherein the first shared tube segment (11) is connected to the total pressure outlets (5) via a first manifold (14) of T-junctions (13) and/or wherein the second shared tube segment (12) is connected to the static pressure outlets (6) via a second manifold (15) of T-fffjunctions (13).

6. Device (1) according to one of the preceding claims, wherein all total pressure inlets (7) are connected directly to the first shared tube segment (11) and/or wherein all static pressure inlets (8) are connected directly to the second shared tube segment (12).

7. Device (1) according to one of the preceding claims, wherein all total pressure inlets (7) are connected directly to an axial center of the first shared tube segment (11) and/or wherein all static pressure inlets (8) are connected directly to an axial center of the second shared tube segment (12).

8. Device (1) according to any of the preceding claims, wherein all first connection lines (9) cover the same length between the respective total pressure outlet (5) and the first shared tube segment (11) and/or wherein all second connection lines (10) cover the same length between the respective static pressure outlet (6) and the second shared tube segment (12).

9. Arrangement (16) comprising a pipe (2) and a device (1) for measuring a flow of a medium through the pipe (2), wherein the device (1) is configured according to any of the preceding claims.

10. Arrangement (16) according to claim 9, wherein the pitot tubes (3) are spaced apart from each other along an axis (A) of the tube (2).

11. Arrangement (16) according to claim 9 or 10, wherein in a cross-section of the pipe (2) each of the pitot tubes (3) is oriented differently.

12. Arrangement (16) according to claim 11, wherein in a cross-section of the pipe (2) all pitot tubes (3) enclose an angle in the range of 30 and 60° with the respective neighboring pitot tubes (3).

13. Arrangement (16) according to claim 9 or 10, wherein in a cross-section of the pipe (2) the pitot tubes (3) are arranged parallel to each other.

14. Arrangement (16) according to one of the claims 9 to 13, wherein the pipe (2) has a cross-sectional area of at least 1 m².

15. Use of a device (1) according to one of the claims 1 to 8 for measuring a flow of a medium through a pipe (2), wherein the medium is exhaust gas.

## Patentansprüche

1. Vorrichtung (1) zum Messen eines Durchflusses eines Mediums durch ein Rohr (2), wobei die Vorrichtung (1) mehrere Pitotrohre (3) und mehrere Sensoreinheiten (4) umfasst, wobei jedes der Pitotrohre (3) einen jeweiligen Gesamtdruckauslass (5) und einen jeweiligen statischen Druckauslass (6) aufweist, wobei jede der Sensoreinheiten (4) einen jeweiligen Gesamtdruckeinlass (7) und einen jeweiligen statischen Druckeinlass (8) aufweist, wobei alle der Gesamtdruckauslässe (5) strömungstechnisch mit allen der Gesamtdruckeinlässe (7) durch jeweilige erste Verbindungsleitungen (9) verbunden sind, wobei alle der statischen Druckauslässe (6) strömungstechnisch mit allen der statischen Druckeinlässe (8) durch jeweilige zweite Verbindungsleitungen (10) verbunden sind, wobei jede der Sensoreinheiten (4) dazu ausgelegt ist, den Durchfluss des Mediums durch das Rohr (2) durch Vergleichen der Drücke an dem jeweiligen Gesamtdruckeinlass (7) und dem jeweiligen statischen Druckeinlass (8) miteinander zu bestimmen, und wobei alle ersten Verbindungsleitungen (9) ein erstes gemeinsames Rohrsegment (11) umfassen und/oder alle zweiten Verbindungsleitungen (10) ein zweites gemeinsames Rohrsegment (12) umfassen.

2. Vorrichtung (1) nach Anspruch 1, wobei die Pitotrohre (3) mittelwertbildende Pitotrohre sind.

3. Vorrichtung (1) nach einem der vorhergehenden Ansprüche, wobei die ersten Verbindungsleitungen (9) dieselbe Länge aufweisen und/oder wobei die zweiten Verbindungsleitungen (10) dieselbe Länge aufweisen.

4. Vorrichtung (1) nach einem der vorhergehenden Ansprüche, wobei mindestens zwei der Gesamtdruckauslässe (5) mit dem ersten gemeinsamen Rohrsegment (11) über eine T-Verzweigung (13) verbunden sind und/oder wobei mindestens zwei der statischen Druckauslässe (6) mit dem zweiten gemeinsamen Rohrsegment (12) über eine T-Verzweigung (13) verbunden sind.

5. Vorrichtung (1) nach einem der vorhergehenden Ansprüche, wobei das erste gemeinsame Rohrsegment (11) mit den Gesamtdruckauslässen (5) über einen ersten Verteiler (14) aus T-Verzweigungen (13) verbunden ist und/oder wobei das zweite gemeinsame Rohrsegment (12) mit den statischen Druckauslässen (6) über einen zweiten Verteiler (15) aus T-Verzweigungen (13) verbunden ist.

6. Vorrichtung (1) nach einem der vorhergehenden Ansprüche, wobei alle Gesamtdruckeinlässe (7) direkt mit dem ersten gemeinsamen Rohrsegment (11) verbunden sind und/oder wobei alle statischen Druckeinlässe (8) direkt mit dem zweiten gemeinsamen Rohrsegment (12) verbunden sind.

7. Vorrichtung (1) nach einem der vorhergehenden Ansprüche, wobei alle Gesamtdruckeinlässe (7) direkt mit einer axialen Mitte des ersten gemeinsamen Rohrsegments (11) verbunden sind und/oder wobei alle statischen Druckeinlässe (8) direkt mit einer axialen Mitte des zweiten gemeinsamen Rohrsegments (12) verbunden sind.

8. Vorrichtung (1) nach einem der vorhergehenden Ansprüche, wobei alle ersten Verbindungsleitungen (9) dieselbe Länge zwischen dem jeweiligen Gesamtdruckauslass (5) und dem ersten gemeinsamen Rohrsegment (11) abdecken und/oder wobei alle zweiten Verbindungsleitungen (10) dieselbe Länge zwischen dem jeweiligen statischen Druckauslass (6) und dem zweiten gemeinsamen Rohrsegment (12) abdecken.

9. Anordnung (16), umfassend ein Rohr (2) und eine Vorrichtung (1) zum Messen eines Durchflusses eines Mediums durch das Rohr (2), wobei die Vorrichtung (1) nach einem der vorhergehenden Ansprüche ausgelegt ist.

10. Anordnung (16) nach Anspruch 9, wobei die Pitotrohre (3) entlang einer Achse (A) des Rohrs (2) voneinander beabstandet sind.

11. Anordnung (16) nach Anspruch 9 oder 10, wobei in einem Querschnitt des Rohrs (2) jedes der Pitotrohre (3) unterschiedlich ausgerichtet ist.

12. Anordnung (16) nach Anspruch 11, wobei in einem Querschnitt des Rohrs (2) alle Pitotrohre (3) einen Winkel im Bereich von 30 und 60° mit den jeweiligen benachbarten Pitotrohren (3) einschließen.

13. Anordnung (16) nach Anspruch 9 oder 10, wobei in einem Querschnitt des Rohrs (2) die Pitotrohre (3) parallel zueinander angeordnet sind.

14. Anordnung (16) nach einem der Ansprüche 9 bis 13, wobei das Rohr (2) eine Querschnittsfläche von mindestens 1 m² aufweist.

15. Verwendung einer Vorrichtung (1) nach einem der Ansprüche 1 bis 8 zum Messen eines Durchflusses eines Mediums durch ein Rohr (2), wobei das Medium Abgas ist.

## Revendications

1. Dispositif (1) de mesure du débit d'un milieu à travers un tuyau (2), le dispositif (1) comportant de multiples tubes (3) de Pitot et de multiples unités (4) de détection, chacun des tubes (3) de Pitot possédant une sortie respective (5) de pression totale et une sortie respective (6) de pression statique, chacune des unités (4) de détection possédant une entrée respective (7) de pression totale et une entrée respective (8) de pression statique, toutes les sorties (5) de pression totale étant reliées fluidiquement à toutes les entrées (7) de pression totale par des premières canalisations respectives (9) de liaison, toutes les sorties (6) de pression statique étant reliées fluidiquement à toutes les entrées (8) de pression statique par des secondes canalisations respectives (10) de liaison, chacune des unités (4) de détection étant configurée pour déterminer le débit du milieu à travers le tuyau (2) en comparant entre elles les pressions à l'entrée respective (7) de pression totale et à l'entrée respective (8) de pression statique, et toutes les premières canalisations (9) de liaison comprenant un premier segment (11) de tube partagé et/ou toutes les secondes canalisations (10) de liaison comprenant un second segment (12) de tube partagé.

2. Dispositif (1) selon la revendication 1, les tubes (3) de Pitot étant des tubes de Pitot moyennés.

3. Dispositif (1) selon l'une des revendications précédentes, les premières canalisations (9) de liaison présentant la même longueur et/ou les secondes canalisations (10) de liaison présentant la même longueur.

4. Dispositif (1) selon l'une des revendications précédentes, au moins deux des sorties (5) de pression totale étant reliées au premier segment (11) de tube partagé via une jonction (13) en T et/ou au moins deux des sorties (6) de pression statique étant reliées au second segment (12) de tube partagé via une jonction (13) en T.

5. Dispositif (1) selon l'une des revendications précédentes, le premier segment (11) de tube partagé étant relié aux sorties (5) de pression totale via un premier collecteur (14) de jonctions (13) en T et/ou le second segment (12) de tube partagé étant relié aux sorties (6) de pression statique via un second collecteur (15) de jonctions (13) en T.

6. Dispositif (1) selon l'une des revendications précédentes, toutes les entrées (7) de pression totale étant directement reliées au premier segment (11) de tube partagé et/ou toutes les entrées (8) de pression statique étant directement reliées au second segment (12) de tube partagé.

7. Dispositif (1) selon l'une des revendications précédentes, toutes les entrées (7) de pression totale étant directement reliées à un centre axial du premier segment (11) de tube partagé et/ou toutes les entrées (8) de pression statique étant directement reliées à un centre axial du second segment (12) de tube partagé.

8. Dispositif (1) selon l'une quelconque des revendications précédentes, toutes les premières canalisations (9) de liaison couvrant la même longueur entre la sortie respective (5) de pression totale et le premier segment (11) de tube partagé et/ou toutes les secondes canalisations (10) de liaison couvrant la même longueur entre la sortie respective (6) de pression statique et le second segment (12) de tube partagé.

9. Agencement (16) comportant un tuyau (2) et un dispositif (1) de mesure du débit d'un milieu à travers le tuyau (2), le dispositif (1) étant configuré selon l'une quelconque des revendications précédentes.

10. Agencement (16) selon la revendication 9, les tubes (3) de Pitot étant espacés entre eux suivant un axe (A) du tube (2).

11. Agencement (16) selon les revendications 9 ou 10, dans une section transversale du tuyau (2), chacun des tubes (3) de Pitot étant orienté différemment.

12. Agencement (16) selon la revendication 11, dans une section transversale du tuyau (2), tous les tubes (3) de Pitot délimitant un angle compris dans la plage de 30 et 60° avec les tubes (3) de Pitot voisins respectifs.

13. Agencement (16) selon la revendication 9 ou 10, dans une section transversale du tuyau (2), les tubes (3) de Pitot étant agencés parallèlement les uns aux autres.

14. Agencement (16) selon l'une des revendications 9 à 13, le tuyau (2) présentant une aire en section transversale d'au moins 1 m².

15. Utilisation d'un dispositif (1) selon l'une des revendications 1 à 8 pour mesurer le débit d'un milieu à travers un tuyau (2), le milieu étant un gaz d'échappement.
